# EUROPÄISCHE PATENTSCHRIFT

(11) **EP 0 533 619 B1**
(45) Veröffentlichungstag und Bekanntmachung des Hinweises auf die Patenterteilung: **25.09.1996**
(21) Anmeldenummer: 92810643.4
(22) Anmeldetag: 24.08.1992
(51) Int. Cl.: D01G 31/00, F16P 3/14, F16P 1/02

(54) **Sicherheitsvorrichtung an einem fahrbaren Maschinenteil einer Textilmaschine**
Security apparatus on a mobile machine part of a textile machine
Appareil de sécurité sur une pièce de machine mobile d'une machine textile

(30) Priorität: 19.09.1991 CH 2778/91; 20.01.1992 CH 152/92; 19.12.1991 CH 3789/91
(43) Veröffentlichungstag der Anmeldung: 24.03.1993
(73) Patentinhaber: MASCHINENFABRIK RIETER AG, CH-8406 Winterthur (CH)
(72) Erfinder: Binder, Rolf, CH-8352 Räterschen (CH); Hanselmann, Daniel, CH-8406 Winterthur (CH); Anderegg, Peter, CH-8400 Winterthur (CH); Schlepfer, Walter, CH-8406 Winterthur (CH); Kyburz, Martin, CH-8450 Andelfingen (CH); Demuth, Robert, CH-8309 Nürensdorf (CH); Gloor, Thomas, CH-5036 Oberentfelden (CH); Aebli, Jost, CH-8408 Winterthur (CH); Faas, Jürg, CH-8474 Dinhard (CH)

(56) Entgegenhaltungen:
- EP-A- 0 428 477
- EP-A- 0 435 816
- DE-A- 3 208 901
- FR-A- 2 489 375
- GB-A- 2 203 239
- US-A- 3 851 168
- US-A- 3 876 969

## Beschreibung

Die Erfindung liegt auf dem Gebiete der Textilmaschinen und bezieht sich auf eine Sicherheitsvorrichtung an einem fahrbaren Maschinenteil gemäss dem Oberbegriff des unabhängigen Patentanspruches , eine solche Vorrichtung ist z.B. aus der EP-A-0 435 816 bekannt. Mit der Sicherheitsvorrichtung wird eine Kollision einer Person mit dem fahrbaren Maschinenteil verhindert. Insbesondere bilden Ballenabtragmaschinen mit einem oder mehreren Abtragwalzen eine Gefahr. Mit der erfindungsgemässen Sicherheitsvorrichtung wird ein Zugriff in den durch die drehenden Abtragwalzen erzeugten Gefahrenbereich verhindert.

Baüenabtragmaschinen weisen ein Maschinengestell mit Rädern auf, das auf im wesentlichen geradlinigen Schienen auf einer begrenzten Abtragstrecke hin und bewegt wird und an dem einseitig und quer zur Scbicneraichtung ein Abtragorgan derart angebracht ist, dass es in der Höhe verstellt werden kann. Die abzutragenden Faserballen werden parallel zur Schiene im Bereiche des Abtragorganes aufgereiht und das Abtragorgan wird für das Abtragen der Fasern auf der Oberfläche dieser Ballenreihe hin und her bewegt.

Das Abtragorgan besitzt eine oder mehrere antreibbare Abtragwalzen, die derart angeordnet sind, dass ihre Rotationsachsen horizontal und senkrecht zur Bewegungsrichtung der Abtragmachine verlaufen. Diese Walzen sind in einem gegen oben und seitlich rundum geschlossenen, gegen unten aber offenen Gehäuse angeordnet. Beim Abtragen ist diese untere Öffnung des Gehäuses im wesentlichen von der Ballenreihen-Oberfläche abgedeckt und die Walzen dadurch ungefährlich. Trotzdem bleiben, speziell bei unregelmässigen Ballenreihen, Gefahrenzonen. Die Abtragwalzen bedeuten dann eine Gefahr, wenn sie sich drehen und die Öffnung des Gehäuses nicht vollständig abgedeckt ist. Dann kann ein Mensch oder ein Gegenstand von unten oder schräg unten in den Bereich der Abtragwalzen greifen und einen Unfall verursachen.

Gefahrenzonen können bekanntlich entweder durch mechanische Abschrankungen abgeschlossen werden, sodass ein Zugriff nicht möglich ist, und/oder es können an Orten, wo ein derartiger Zugriff möglich ist, mit Hilfe von Sensoren Überwachungsschranken vorgesehen werden, die im Falle eines Zugriffes ein Alarmsignal generieren, durch das dann beispielsweise die Gefahr ausgeschaltet wird, im Falle der Ballenabtragmaschine also die Abtragwalzen oder die ganze Abtragmaschine gestoppt werden, sodass sie keine Gefahr mehr bedeuten.

Gemäss dem Stande der Technik wird der Gefahr, die die drehenden Abtragwalzen bedeuten können, wenn sie nicht abgedeckt sind, auf zwei Arten begegnet: durch eine stationäre Abschrankung der ganzen Ballenreihe, also des ganzen Raumes, in dem sich die gefährlichen Walzen bewegen, oder durch eine sich im wesentlichen mit den gefährlichen Walzen bewegende Abschrankung der näheren Umgebung dieser Walzen.

Eine stationäre Abschrankung, die den ganzen Bereich der Bewegung des Abtragorganes umfasst, wird beispielsweise in der deutschen Patentschrift Nr. 3032584 beschrieben. Es ist dazu eine Lichtschranke rund um die Ballenreihe vorgesehen, bei deren Unterbrechung die Abtragwalzen gestoppt werden. Der Nachteil einer derartigen oder ähnlicher Vorrichtungen ist der, dass der abgeschrankte Bereich sehr gross ist und deshalb die Bewegungsfreiheit von bedienendem Personal sehr einschränkt. Auch wird die Wahrscheinlichkeit für Fehlalarme relativ gross, da ein Durchbrechen der Abschrankung nur in wenigen Fällen eine wirkliche Gefahr bedeutet und deshalb beispielsweise die Maschine zu viel gestoppt wird. Ein weiterer Nachteil derartiger Vorrichtungen besteht darin, dass auch grosse, vor dem Anschalten der Sicherheitsschranke im Bereiche der Ballenreihe anwesende Fremdkörper, ja sogar ein Mensch, der sich dort aufhält, nicht detektiert werden können.

Um derartige Nachteile zu verhindern, sind Sicherheitsvorrichtungen beschrieben worden, die mit mechanischen und/oder sensorischen Mitteln nur gerade die unmittelbare Umgebung der gefährlichen Abtragwalzen abschranken, wobei sich die Schranken mit dem Maschinengestell und dem Abtragorgan bewegen. Derartige Vorrichtungen sind beispielsweise beschrieben in der europäischen Patentanmeldung Nr. 90810018.3 (veröffentlicht am 25.7.90, Veröffentlichungsnummer 0379465) derselben Anmelderin. Mit den in dieser Anmeldung beschriebenen Sicherheitsvorrichtungen werden alle Stellen, an denen der Gefahrenbereich unterhalb dem Abtragorgan nicht durch den Boden, durch Maschinenteile oder Ballen abgeschlossen ist, durch mechanische und/oder sensorische Schranken abgeschlossen, sodass dieser Bereich völlig geschlossen ist. Da aber die Abgrenzung dieses Gefahrenbereiches durch den Boden und die Ballen in hohem Masse von der Form der Ballenreihe abhängt, müssen die zusätzlichen Schranken, vor allem die sensorischen, auf diese Form der Ballenreihe abgestimmt werden, wobei sich diese Form bei unregelmässigen Ballenreihen während der Bewegung der Abtragmaschinen dauernd verändert. Die beschriebenen Anordnungen gewähren zwar eine sehr hohe Sicherheit bei einer maximalen Bewegungsfreiheit, sind aber sehr aufwendig, da sie entsprechend der effektiven Form der Ballenreihe, die gerade abgetragen werden soll, gesteuert werden müssen. Ohne eine derartige Steuerung werden Ballen oder Teile von Ballen als unbefugter Zugriff interpretiert. Dies setzt komplizierte Steuermechanismen voraus, die nicht nur die Maschine aufwendiger machen, sondern ihrerseits wieder neue Sicherheitsrisiken bedeuten.

Es ist nun die Aufgabe der Erfindung, eine Sicherheitsvorrichtung an einer Ballenabtragmaschine zu schaffen, die ohne aufwendige Steuerung autonom arbeitet, die es aber trotzdem erlaubt, Zugriff zur Zone unterhalb den laufenden Abtragwalzen wirkungsvoll zu verhindern oder im Falle eines derartigen Zugriffes die Walzen oder die Maschine zu stoppen. Die Sicherheitsvorrichtung soll ferner eine einfache Selbstkontrolle ermöglichen.

Diese Aufgabe wird gelöst durch die Sicherheitsvorrichtung an einer BallenabtragMaschine gemäss dem kennzeichnenden Teil des unabhängigen Patentanspruches.

Jeder nicht abgedeckte Teil einer rotierenden Abtragwalze, der frei zugänglich ist, stellt eine effektive Gefahr dar. Der ganze Raum, in dem sich das Abtragorgan bewegen kann und in dem auch die ganze abzutragende Ballenreihe enthalten ist, beinhaltet potentielle Gefahrenzonen. Befindet sich das Abtragorgan oder Teile davon in einer potentiellen Gefahrenzone und sind keine Sicherheitsmassnahmen vorgesehen, so ist ein freier Zugriff zu den rotierenden Abragwalzen möglich, es besteht also eine effektive Gefahr. Potentielle Gefahrenzonen existieren an den Enden der Ballenreihe, über der Ballenreihe, in Lücken der Ballenreihe und entlang der Balleureihen-Längs-seiten, speziell an Stellen, wo Ballen positioniert sind, deren Breite nicht der maximal möglichen Ballenbreite entspricht. Diese potentiellen Gefahrenzonen lassen sich aufteilen in zwei Gruppen: In den potentiellen Gefahrenzonen der ersten Gruppe (Ende der Ballenreihe, über der Ballenreihe, in Lücken der Ballenreihe) ist die Gehäuseöffnung über die ganze Länge der Abtragwalzen nicht von Ballenoberflächen abgedeckt; in den potentiellen Gefahrenzonen der zweiten Gruppe (seitlich der Ballenreihen) ist die Gehäuseöffnung nur teilweise von Ballenoberflächen abgedeckt.

Die erfindungsgemässe Sicherheitsvorrichtung kann nun aus drei Teilen bestehen. Ein Teil detektiert potentielle Gefahrenzonen der ersten Gruppe und leitet Massnahmen ein, dass diese nicht zur effektiven Gefahr werden können. Ein weiterer Teil schrankt die Abtragswalzen auf der dem Maschinengestell zugewandten Seite derart ab, dass in den potentiellen Gefahrenzonen der zweiten Gruppe auf der dem Maschinengestell zugewandten Ballenreihen. Längsseite keine effektive Gefahr entstehen kann. Ein dritter Teil bewirkt dasselbe auf der vom Maschinengestell abgewandten Ballenreihen-Längsseite.

Jeder der drei Teile der erfindungsgemässen Sicherheitsvorrichtung kann mit einem elcktroakustischen Wandler oder mit einer Gruppe von elektroakustischen Wandlern und einer entsprechenden Steuereinheit als autonome und selbstkontrollierende Einheit realisiert werden Es können auch Teilvorrichtungen mit elektroakustischen Wandlern mit anderen Sicherheitsvorrichtungen, beispielsweise mechanischen oder mit anderen Sensoren realisierten Schranken kombiniert werden.

Die erfindungsgemässe Ballenabtragmaschine wird anhand der folgenden beispielhaften Figuren detailliert beschrieben. Dabei zeigen:
- **Figur 1**: eine schematisierte Draufsicht auf eine Ballenabtragmaschine und eine abzutragende Ballenreihe, als Darstellung der potentiellen Gefahrenzonen;
- **Figur 2**: eine schematische Seitenansicht einer Ballenabtragmaschine und eine abzutragende Ballenreihe, als Darstellung der potentiellen Gefahrenzonen;
- **Figuren 3 und 4**: Draufsicht und Seitenansicht einer ersten beispielhaften Ausführungsform der erfindungsgemässen Ballenabtragmaschine mit Sicherheitsvorrichtung;
- **Figuren 5, 6 und 7**: Detailschnitte durch eine Anordnung mit elektroakustischem Wandler, wie er in der Ausführungsform der erfindungsgemässen Ballenabtragmaschine gemäss Figuren 3 und 4 zur Anwendung kommt;
- **Figuren 8,9 und 10**: wie Figuren 5, 6 und 7, aber mit je zwei elektroakustischen Wandlern;
- **Figuren 11 und 12**: eine weitere Ausführungsform der sensorischen Mittel zur Bildung einer Sicherheitsschranke auf der vom Maschinengestell abgewandten Ballen-Längsseite als Ansicht senkrecht zur Bewegungsrichtung (Figur 11) und parallel zur Bewegungsrichtung (Figur 12);
- **Figuren 13 und 14**: sensorische Mittel zur Bildung einer Sicherheitsschranke senkrecht zur Bewegungsrichtung als Ansicht parallel zur Bewegungsrichtung;
- **Figuren 15 und 16**: sensorische Mittel zur Bildung einer Sicherheitsschranke parallel zur Ballenoberfläche als Ansicht parallel zur Bewegungsrichtung (Figur 15) und als Draufsicht (Figur 16).
- **Figur 17**: eine Variante von Figur 1;
- **Figur 18**: eine Variante von Figur 2.

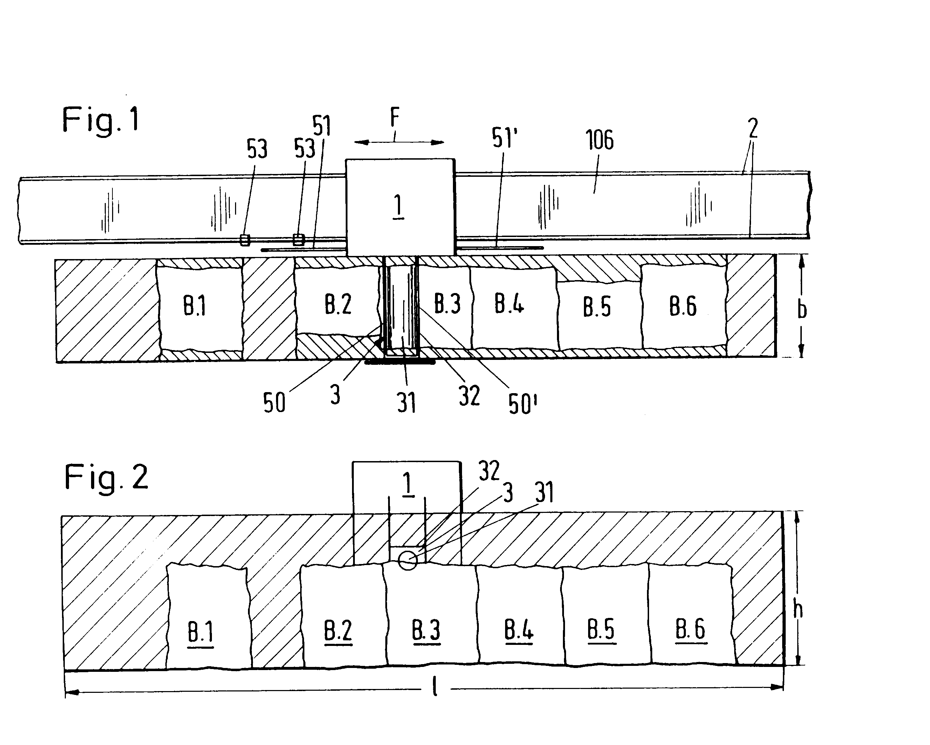

**Figuren 1 und 2** sind schematische Darstellungen einer Ballenabtragmaschine und dienen zum Aufzeigen der potentiellen Gefahrenzonen, die beim Abtragen einer beispielhaften Ballenreihe B.1 bis B.6 vorhanden sind. Figur 1 ist eine Draufsicht, Figur 2 eine Seitenansicht auf die von der Ballenabtragmaschine abgewandte Ballenreihen.Längsseite. Die Ballenreihe B.1-6 ist entlang einer Schiene 2 angeordnet. Auf der Schiene ist die Ballenabtragmaschine in beiden Richtungen des Doppelpfeiles F fahrbar angeordnet. Sie besteht im wesentlichen aus einem fahrbaren Maschinengestell 1 und einem daran in vertikaler Richtung bewegbar angeordneten Abtragorgan 3. Das Abtragorgan 3 weist beispielsweise eine Abtragwalze 31 auf und ein diese Abtragwalze gegen oben und seitlich abdeckendes Gehäuse 32, das nur gegen unten offen ist.

Der Raum mit der Länge 1, der Breite b und der Höhe h, stellt den Raum dar, in dem sich das Abtragorgan bewegen kann. Die abzutragende Ballenreihe, die vollständig in diesem Raum untergebracht sein muss, macht den ungefährlichen Teil dieses Raumes aus, der Rest setzt sich zusammen aus potentiellen Gefahrenzonen, und zwar an den Enden der Reihe, in Lücken (zwischen Ballen B.1 und B.2) und über der Reihe aus potentiellen Gefahrenzonen der ersten Gruppe (in der Figur weit schraffiert, Öffnung des Walzengehäuses über die ganze Walzenlänge nicht abgedeckt), beidseitig der Ballenreihe aus potentiellen Gefahrenzonen der zweiten Gruppe (in den Figuren eng schraffiert, Öffnung im Walzengehäuse teilweise abgedeckt).

Wie bereit erwähnt, ist die Öffnung unten am Gehäuse 32 von der Ballenoberfläche sicher abgedeckt, solange das Abtragorgan sich in Abtragposition direkt auf einer Ballenoberfläche befindet (Figur 2) und die abzutragende Ballenreihe in ihrer Breite der Länge der Abtragwalzen genau entspricht. Da die Bien über ihre ganze Breite regelmässig abgetragen werden müssen und da eine sehr exakte Positionierung der Ballen nicht möglich ist, sind die Abtragwalzen aber um weniges länger als die grösste Breite der Ballenreihe, sodass eine schmale potentielle Gefahrenzone der ersten Gruppe beidseitig entlang den Ballenreihen-Längsseiten verläuft auch im Bereiche von Ballen mit der höchstmöglichen Breite. Diese seitlichen, potentiellen Gefahrenzonen verbreitern sich da, wo Ballen mit geringerer Breite (Ballen B.2 und B.5) angeordnet sind. Das heisst, entlang beiden Ballenreihen-Längsseiten sind an den stirnseitigen Enden der Abtragwalze grössere oder kleinere Bereiche dieser Walze von unten oder von schräg unten zugänglich und dadurch gefährlich.

Befindet sich das Abtragorgan nicht unmittelbar auf einer Ballenoberfläche, also nicht in einer eigentlichen Abtragposition, sondern mit Abstand über der Ballenreihe, in einer Ballenreihen-Lücke oder jenseits vom Ende der Ballenreihe, ist die Walze in ihrer ganzen Länge nicht abgedeckt und zugänglich, sodass hier potentielle Gefahrenzonen der ersten Gruppe auftreten.

Eine Sicherheitsvorrichtung muss nun derart ausgestaltet sein, dass die Abtragwalze im ganzen Raum 1*b*h entweder völlig abgedeckt ist, nicht rotiert oder aber sich in einem geschützten Bereich befindet, in den ein Zugriff nicht möglich ist, oder der auf einen solchen Zugriff durch Beseitigung der Gefahr (Stoppen der Walze oder der Maschine) reagiert. Die erfindungsgemässe Sicherheitsvorrichtung weist dazu Teilvorrichtungen auf, wobei ein Teil Sicherheit in potentiellen Gefahrenzonen der ersten Gruppe, die zwei anderen Teile Sicherheit in den potentiellen Gefahrenzonen der zweiten Gruppe je auf einer Ballenreihen-Längsseite gewährleisten. Jede der Teilvorrichtungen besteht aus einem elektroakustischen Wandler oder einer Gruppe von elektroakustischen Wandlern und einer dazugehörenden Steuereinheit.

Auf der dem Maschinengestell zugewandten Ballenreihen-Längsseite werden die potentiellen Gefahrenzonen der zweiten Gruppe, die vom Abtragorgan gerade durchquert werden, durch auf beiden Seiten des Maschinengestelles parallel zur Baflenreihen-Längsseite vorgesehene, mit dem Maschinengestell mitbewegende Sicherheitsschranken 51 und 51' abgeschrankt. Diese Sicherheitsschranken überwachen auf einer bestimmten Strecke vor und nach dem Maschinengestell den Zugang zur Ballenreihen-Längsseite.

Die mit dem Maschinengestell bewegten Sicherheitsschranken haben zwei Funktionen: bei einem Eindringen in den abgeschrankten Raum eine Maschinenreaktion eiuzuleiten und Objekte zu erkennen, die quasi stationär von dieser Seite gegen die Ballenreihen-Längsseite ragen, und auch in einem solchen Fall eine Maschinenreaktion einzuleiten.

Da sich die Sicherheitsschranken 51 und 51' in dem Raume befinden, den das Maschinengestell für seine Bewegung beansprucht, ist sie offensichtlich aus-serhalb jeder möglichen Ballenreihe situiert und muss deshalb nicht an die exakte Form der Ballenreihe angepasst oder nach dieser gesteuert werden. Nur wenn sich das Maschinengestell im Bereich der Bafleureihenenden befindet, können die Sicherheitsschranken über den Bewegungsbereich des Maschinengestelles hinaus ragen. Es muss also dort entsprechend mehr leerer Raum zur Verfügung stehen, oder die Schranke in diesem Bereiche verkürzt werden.

Die Sicherheitsschranken 51 und 51' können sich in der Höhe kontinuierlich erstrecken und den ganzen Bewegungsbereich des Abtragorganes in vertikaler Richtung abdecken. Sie können auch aus linienartigen über die Höhe verteilten Schranken, oder gar nur aus einer einzigen derartigen Schranke bestehen, die in einem unteren Bereich vorgesehen ist. Die Sicherheitsschranken sind möglichst nahe an der Baüenreihen-Längsseite zu positionieren, denn nur so wird die Wahrscheinlichkeit, dass quasi stationäre Gegenstände in den seitlichen potentiellen Gefahrenzonen erkannt werden, für die Sicherheit genügend. Die Ausdehnung derartiger Sicherheitsschranken in Bewegungsrichtung der Maschine sind so zu wählen, dass ein Mensch mit keiner Extremität oder einem in der Hand gehaltenen Gegenstand um die Schranke herum in die effektive Gefahrenzone unter der Abtragwalze reichen kann, ohne mit irgend einem Teil seines Körpers die Sicherheitsschranke zu durchbrechen.

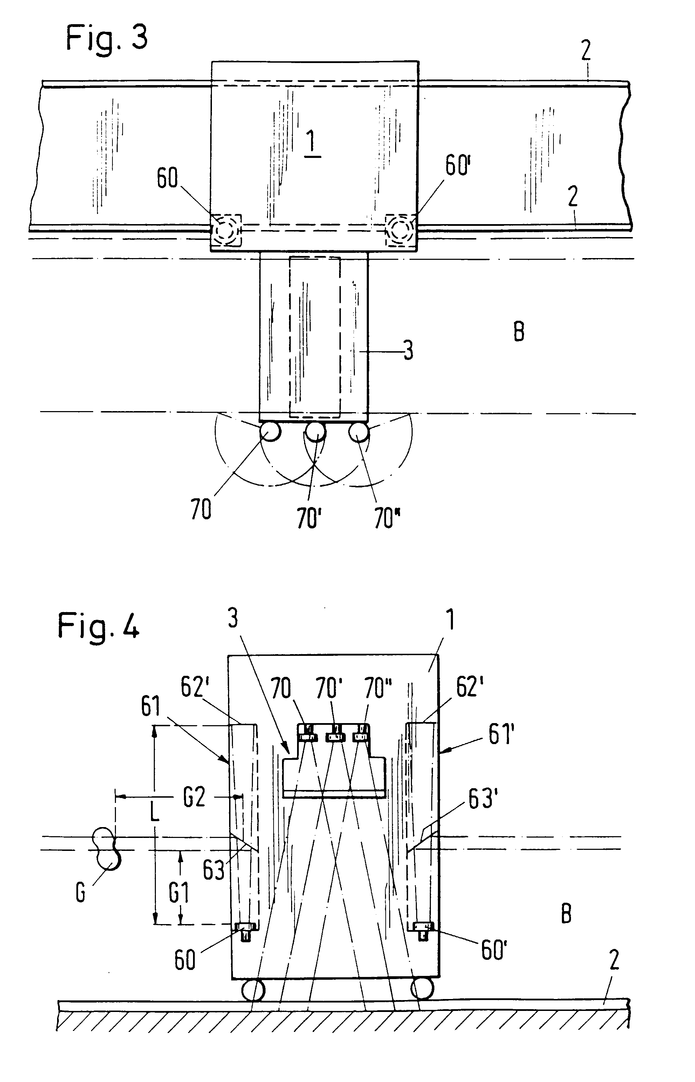

Bevorzugte Ausführungsformen für die Sicherheitsmittel zur Erstellung einer Sicherheitsschranke auf der dem Maschinengestell zugewandten Ballenreihen-Längsseite werden im Zusammenhang mit den Figuren 3 bis 10 beschrieben.

Potentielle Gefahrenzonen auf der vom Maschinengestell abgewandten Ballenreiben-Längsseite werden durch eine Sicherbeitsschranke 52 (Figur 1) abgeschirmt, die im wesentlichen parallel zur Ballenreihen-Längsseite angeordnet ist und sich von der Stirnseite des Abtragorganes beidseitig in Bewegungsrichtung und gegen unten erstreckt. Diese Schranke kann eine mechanische sein, die einen gefährlichen Zugriff verhindert, oder eine sensorische, die einen derartigen Zugriff erkennt und die Abtragwalzen entsprechend stoppt. Die Schranke 52 bewegt sich mit dem Abtragorgan und ist jederzeit ausserhalb jeder möglichen Ballenreihe situiert, sodass sie nicht an die Geometrie dieser Reihe angepasst werden muss. Wie für die Schranken 51 und 51′ gilt auch für die Schranke 52, dass sie möglichst nahe an der Ballenreihen-Längsseite vorgesehen werden soll und dass ihre Ausdehnung gegen unten und seitlich derart sein muss, dass ein Mensch mit keiner Extremität und auch nicht mit einem Gegenstand in seiner Hand um die Schranke herum in die Zone der effektiven Gefahr greifen kann.

Sicherheitsschranken für die vom Maschinengestell abgewandte BallenreihenLängsseite werden im Zusammenhang mit den Figuren 3, 4, 11 und 12 beschrieben.

Sicherheitsschranken 50 und 50′ (Figur 1), die parallel zur Rotationsachse der Abtragwalze verlaufen, müssen derart gesteuert werden, dass sie in potentiellen Gefahrenzonen der ersten Gruppe (ganze Länge der Abtragwalze zugänglich) aktiv, sonst passiv sind. Überwachungsmittel, die die Position der Abtragwalzen relativ zu einer Ballenoberfläche überwachen, sind an sich bekannt. Es kann sich dabei beispielsweise um am Walzengehäuse angebrachte sensorische Mittel handeln, die parallel zur Abtragwalze, vorteilhafterweise auf beiden Seiten der Walze je beispielsweise eine Lichtschranke bilden. Solange beide Lichtschranken unterbrochen sind, befindet sich das Abtragorgan in Abtragposition direkt auf einer Ballenoberfläche, wenn eine Lichtschranke nicht unterbrochen ist, tritt das Abtragorgan in eine potentielle Gefahrenzone der ersten Gruppe ein, das heisst, die untere Öffnung des Gehäuses wird nicht (auch nicht teilweise) durch eine Ballenoberfläche abgedeckt und dadurch gefährlich, sodass eine entsprechende Sicherheitsvorrichtung, beispielsweise parallel zur Rotationsachse der Abtragwalze vorgesehene Sicherheitsschranken, aktiv geschaltet werden muss. Für die Steuerung der Sicherheitsschranken parallel zur Rotationsachse der Abtragwalze könnnen auch Lücken und Ende der Ballenreihe markierende Tastnocken 53 verwendet werden. Diese werden an den entsprechenden Stellen an einer Schiene 2 montiert und ihre Position mit einem entsprechenden Taster am Maschinengestell erfasst.

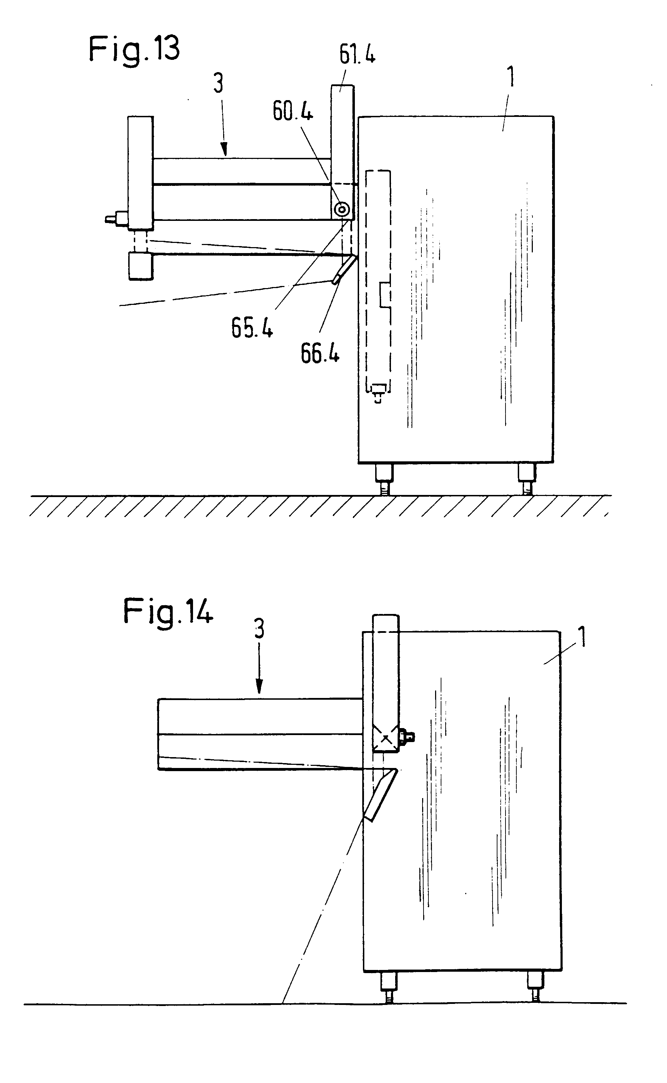

Sicherheitsschranken, die im wesentlichen parallel zu den Rotationsachsen der Abtragwalze verlaufen, werden im Zusammenhang mit den Figuren 13, 14, 15 und 16 beschrieben.

Jeder Teil der erfindungsgemässen Sicherheitsvorrichtung kann autonom und unabhängig von der Maschinensteuerung realisiert werden. Entsprechend kombinierte Teile ergeben eine Sicherheitsvorrichtung, die potentielle Gefahrenzonen der ersten Gruppe, die sich über die ganze Länge der Abtragswalzen erstrecken, erkennt und reagiert derart darauf, dass daraus keine effektiven Gefahren entstehen. Ebenso verhindert sie Zugriff in potentielle Gefahrenzonen der zweiten Gruppe, die nur Teile der Abtragwalzen betreffen, oder beseitigt eine entsprechende effektive Gefahr bei einem derartigen Zugriff. Ferner erkennt sie quasi stationäre Fremdgegenstände in potentiellen Gefahrenzonen, wenn diese seitlich aus der Ballenreihe oder gegen oben über die Oberfläche der Ballenreihe ragen, und reagiert darauf, bevor die entsprechende Stelle zur effektiven Gefahrenzone wird.

Alle im Zusammenhang mit den Figuren 3 bis 16 beschrieben Sicherheitsvorrichtungen weisen elektroakustische Wandler, beispielsweise Ultraschallwandler auf und sind für eine Selbstkontrolle konzipiert. Entsprechende Wandler, deren Anordnung und Funktionsweise mit einer entsprechenden elektronischen Steuereinheit als Überwachungssensoren mit Selbstkontrolle sind, allerdings in einer anderen Anwendung, bereits bekannt aus der deutschen Offenlegungsschrift Nr. 3932665 A1 (oder europäische Patentanmeldung mit der Veröffentlichungsnummer 0419833) derselben Anmelderin, die als integrierender Bestandteil dieser Anmeldung gilt, und werden deshalb in ihrer Funktionsweise hier nicht detailliert beschrieben.

Da die Ballenabtragmaschine und die Handhabung der Ballen viel Staub verursachen und da aurf dem Boden der Öffnerei auch vielfach Flocken in kleineren oder grösseren Ansammlungen herumliegen, ist es vorteilhaft, die elektroakustischen Wandler in einem möglichst geschlossenen Raum zu positionieren und nicht den Boden als Referenzreflektor zu benützen. Aus diesem Grunde werden für diese Anwendung die elektroakustischen Wandler vorteilhafterweise mit nach oben gerichteter Hauptsenderichtung in einem Schallschacht positioniert, dessen obere Wandung als Referenzreflektor dient. Ein solcher Referenzreflektor bleibt wegen seiner Abgeschlossenheit und seiner gegen unten gerichteten Lage weitgehend frei von Verschmutzung und gewährleistet eine konstante Referenzmessung. Ferner kann er einfach in seinem Abstand zum Wandler einstellbar realisiert werden.

**Figuren 3 und 4** zeigen eine erste Ausführungsform von sensorischen Mitteln, mit deren Hilfe Sicherheitsschranken parallel zu den Ballenreihen-Längsseiten erzeugt werden. Die Figuren zeigen wiederum als Draufsicht und als Seitenansicht (von der vom Maschinengestell abgewandten Seite der Ballenreihe) die genannte Ballenabtragmaschine, die auf den Schienen 2 entlang einer Ballenreihe B in zwei Richtungen fahrbar angeordnet ist, mit dem Maschinengestell 1 und dem Abtragorgan 3.

Innerhalb des Maschinengestelles 1 im unteren Bereich ist beidseitig, mit Blick auf die Figuren gesehen, je ein elektroakustischer Wandler 60 bzw. 60' und ein Schacht 61 und 61' derart angebracht, dass der vom Wandler ausgesendete Richtstrahl im Schacht im wesentlichen senkrecht nach oben gerichtet ist. Die beiden Schächte und Wandler sind so nahe wie möglich an der der Ballenreihe zugewandten Seite des Maschinengestelles 1 angeordnet. In der Hauptsenderichtung des Wandlers ist von diesem um eine Strecke L beabstandet, senkrecht zur Hauptsenderichtung angeordnet ein Referenzreflektor 62 bzw. 62' angeordnet und vom Wandler um eine Strecke G.1 < L beabstandet, im wesentlichen mit einem Winkel von 45° gegen die Hauptsenderichtung geneigt ein Umlenkreflektor 63 bzw. 63' angeordnet, der einen Teil des Richtstrahles in einer im wesentlichen horizontalen und zur Bewegungsrichtung der Maschine parallelen Richtung aus dem Maschinengestell hinaus ablenkt. Auf der Höhe des Umlenkreflektors 63 bzw. 63' ist der Schacht mit einer entsprechenden Austrittsöffnung für den umgelenkten Richtstrahl versehen.

Ein am Referenzreflektor 62 bzw. 62' reflektiertes Schallsignal wird nach dem Aussenden durch den Wandler nach einer der Strecke L entsprechenden Zeit von diesem wieder empfangen und dient als Selbstkontrollsignal. Es kann auch in der folgenden Weise als Referenzsignal ausgewertet werden. Der vom Umlenkreflektor 63 bzw. 63′ umgelenkte Teil des Richtstrahles wird beispielsweise an einem Gegenstand G ausserhalb des Maschinengestells reflektiert, und die entsprechenden Signale werden vom Wandler nach einer Zeit empfangen, die der Strecke G.1 plus dem Abstand G.2 des Gegenstandes G vom Umlenkreflektor 63 entspricht. Die Strecke L wird nun derart gewählt, dass sie gleich gross ist wie die Summe der Strecken G.1 und G.2 für einen Gegenstand der so weit vom Maschinengestell entfernt ist, dass er gerade nicht mehr detektiert werden muss. Vom Wandler nach einer Zeit entsprechend der Strecke L empfangene Signale werden als Kontrollsignale für die Selbstkontrolle des Systems ausgewertet. Werden keine Signale nach dieser Zeit empfangen, bedeutet das einen Defekt in der Sicherheitsvorrichtung und es werden beispielsweise Abtragwalzen und Maschine abgestellt. Signale, die nach einer kürzeren Zeit empfangen werden, werden als Alarmsignale für einen Fremdgegenstand im Bereiche des Abtragorganes ausgewertet, was ebenfalls zu einer Abstellung von Walzen und Maschine führt. Signale, die nach einer längeren Zeit als der der Strecke L entsprechenden Zeit empfangen werden, werden ignoriert.

Damit die Reichweite einer derartigen Sicherheitsvorrichtung einstellbar wird, kann der Referenzreflektor 62 in seinem Abstand zum Wandler 60 einstellbar im Schacht angebracht werden. Damit wird die Länge L und damit verbunden auch die Reichweite der Überwachung einstellbar. Derselbe Effekt kann auch softwaremässig erzielt werden.

Es sind auch Varianten mit zwei oder mehr Umlenkreflektoren denkbar, die den Richtstrahl in einen Kontrollteil und mehrere, übereinander angeordnete horizontale Messteile aufteilen. Ferner sind auch Varianten denkbar, in der der Wandler mit einer im wesentlichen senkrecht gegen unten gerichteten Hauptsenderichtung angeordnet ist. In diesem Falle dient der Boden als Referenzreflektor. Die Variante mit nach oben gerichteter Senderichtung und Schacht ist vorzuziehen, da in der Öffnerei der Boden vielfach mit Flocken bestreut ist, die das Kontrollsignal verfälschen könnten und da dadurch die Strecke L nur noch in sehr engen Grenzen vorgebbar ist.

Die Figuren 3 und 4 zeigen auch eine beispielhafte Ausführungsform von Sicherheitsmitteln zum Bilden einer Sicherheitsschranke auf der vom Maschinengestell abgewandten Ballenreihen-Längsseite. Es handelt sich dabei um eine Anordnung von drei synchronisierten elektroakustischen Wandlern 70, 70′ und 70′′′, die derart an der Stirnseite des Abtragorgangehäuses angebracht sind, dass ihre Hauptsenderichtung im wesentlichen senkrecht nach unten gerichtet ist und dass ihr Abstand vom Boden gleich ist. Sie sind am Gehäuse so hoch wie möglich angeordnet, damit ihr Bereich in der Zone der effektiven Gefahr direkt unterhalb der Abtragwalze in Bewegungsrichtung genügend gross ist, um einen Zugriff zur Abtragwalze zu verhindern.

Die selbstkontrolle der Anordnung der Wandler 70, 70′ und 70˝ besteht aus dem Empfang der vom Boden reflektierten Signale, die innerhalb einer zu bestimmenden Toleranz für Bodenverschmutzungen gleichzeitig empfangen werden müssen. Nicht gleichzeitig von allen drei Wandlern empfangene Signale werden als Defekt oder Fremdkörper interpretiert.

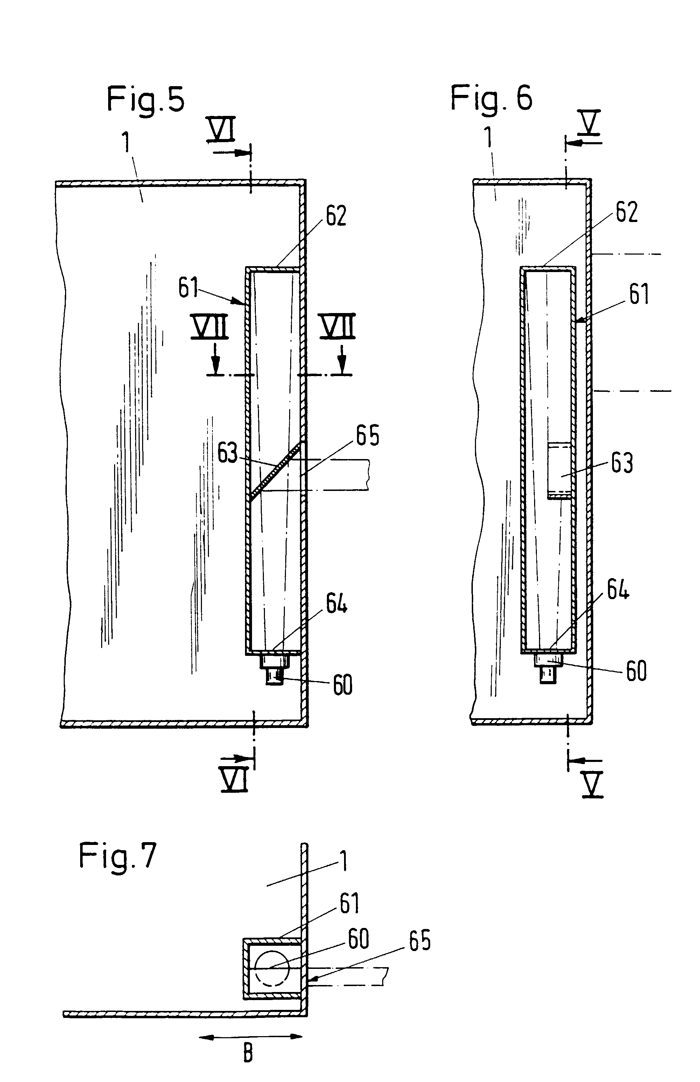

**Figuren 5, 6 und 7** zeigen detaillierte Schnitte durch eine der Vorrichtungen zum Bilden einer sensorischen Sicherheitsschranke seitlich vom Maschinengestell, wie sie bereits in den Figuren 3 und 4 dargestellt wurde. Die Schnittebenen und Blickwinkel sind mit den den Figurennummern entsprechenden römischen Zahlen gekennzeichnet. Die ganze Vorrichtung besteht aus einem Schacht 61 mit einer unteren Öffnung 64 und einer seitlichen Öffnung 65, einem elektroakustischen Wandler 60, der in der unteren Öffnung 64 angeordnet ist, einem Referenzreflektor 62, der der unteren Öffnung 64 gegenüberliegend angeordnet ist, und einem Umlenkreflektor 63, der auf der Höhe der seitlichen Öffnung 65 angeordnet ist. Die ganze Vorrichtung ist innerhalb des Maschinengestelles 1 angeordnet. Der Vorteil dieser inneren, geschlossenen Vorrichtung ist der, dass der Wandler und die Reflektoren weitgehend vor Verschnmutzung durch Fasern und Staub geschützt sind.

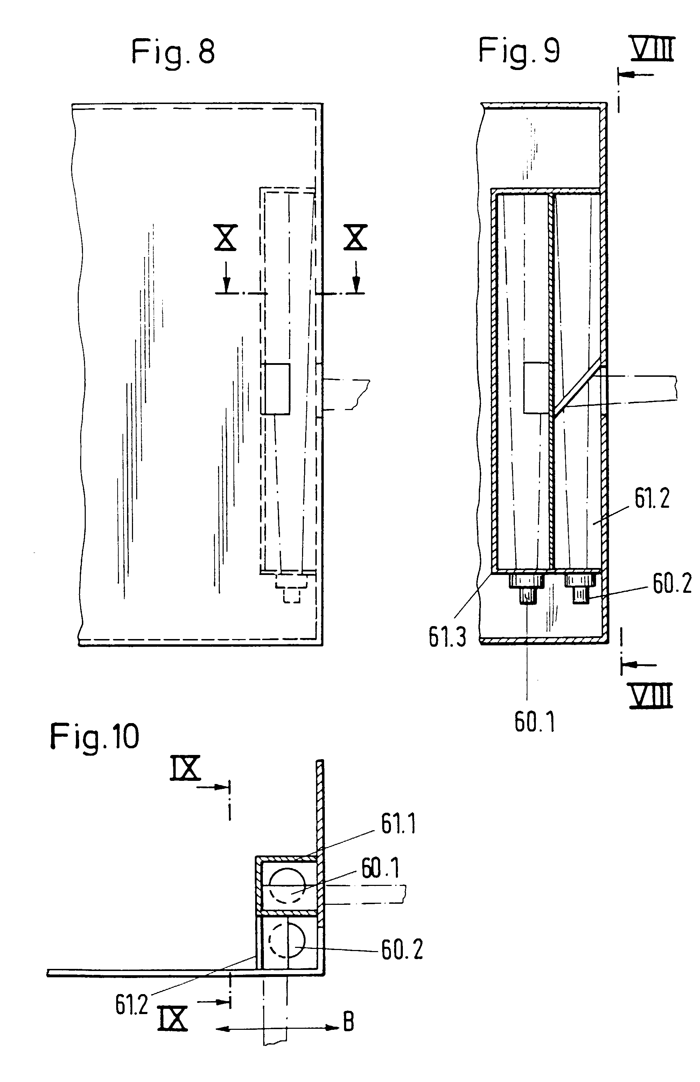

**Figuren 8, 9 und 10** zeigen in gleicher Darstellung wie die Figuren 5, 6 und 7 eine seitlich am Machinengestell angeordnete Vorrichtung von je zwei Wandlern 60.1 und 60.2 mit entsprechenden Schächten 61.1 und 61.2. Dabei erzeugt der Wandler 60.1 eine Sicherheitsschranke, die parallel zur Bewegungsrichtung F verläuft, der Wandler 60.2 eine Sicherheitsschranke, die senkrecht zur Bewegungsrichtung F verläuft. Da die Sicherheitsschranke senkrecht zur Bewegungsrichtung F in den Bereich der Ballen und damit auch in Lücken zwischen Ballen reicht, aber nicht zwischen Ballen und Fremdkörper unterscheiden kann, muss sie für Lücken und am Ballenreihenende aktiv, sonst passiv geschaltet werden. Beispielsweise können dazu an den Schienen Tastnocken (ssiehe auch Figur 1, Referenznummer 53) vorgesehen sein, welche das Ein-uns Ausschalten steuern.

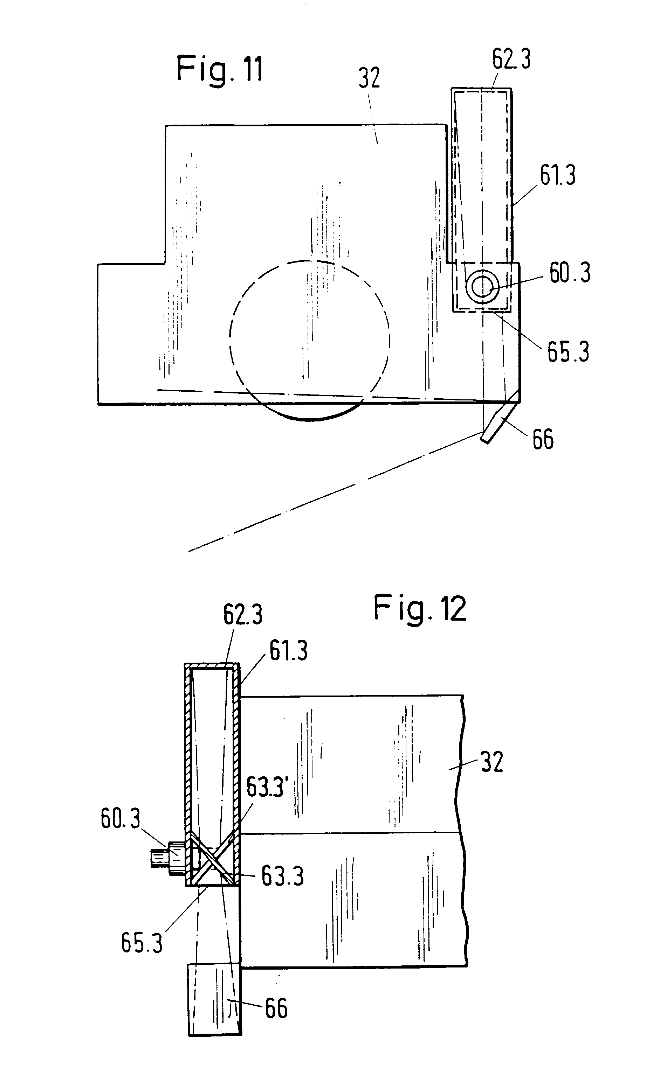

**Figuren 11 und 12** zeigen eine weitere Ausführungsform von sensorischen Mitteln mit Selbstkontrollmöglichkeit zum Bilden einer Sicherheitsschranke parallel zur Ballenreihe-Längsseite auf der vom Maschinengestell abgewandten Seite der Ballenreihe. Hier kommt nur ein elektroakustischer Wandler 60.3 und ein entsprechender Schacht 61.3 zur Anwendung, sodass nicht wie in der im Zusammenhang mit den Figuren 3 und 4 beschriebenen Ausführungsform der Boden als Referenzreflektor verwendet werden muss. Der Schacht 61.3 ist aufrecht an der Frontseite des Abtragorgangehäuses 32 angeordnet und besitzt in seinem unteren Bereich eine seitliche Öffnung für den Wandler 60.3 und eine untere Austrittsöffnung 65.3. Auf der Höhe des Wandlers 60.3 sind im Schacht 61.3 kreuzweise nebeneinander zwei Umlenkreflektoren 63.3 und 63.3′ angeordnet derart, dass der Umlenkreflektor 63.3 einen Teil des Richtstrahles nach oben gegen den Referenzreflektor 62.3, der Umlenkreflektor 63.3′ den anderen Teil des Richtstrahles nach unten aus der Austrittsöffnung 65.3 ablenkt. Ausserhalb der Austrittsöffnung 65.3 ist ein weiterer Umlenkreflektor 66 angeordnet, der derart ausgebildet und angeordnet ist, dass der Richtstrahl parallel zur Bewegungsrichtung umgelenkt und aufgefächert wird. In dieser Weise wird es möglich, mit nur einem Wandler 60.3 die Gefahrenzone auf der vom Maschinengestell abgewandten Seite der Ballenreihe sicher abzuschranken.

**Figuren 13 und 14** zeigen zwei Ausführungsformen von sensorischen Mitteln zum Bilden einer Sicherheitsschranke senkrecht zur Bewegungsrichtung, in beiden Fällen als Ansichten parallel zur Bewegungsrichtung. In beiden Fällen kommen elektroakustische Wandler zur Anwendung.

Figur 13 zeigt ein im Bereiche seiner dem Maschinengestell 1 zugewandten Stirnseite am Abtragorgan 3 aufrecht befestigter Schacht 61.4 mit elektroakustischem Wandler 60.4 wie im Zusammenhang mit den Figuren 11 und 12 beschrieben. Ausserhalb der Austrittsöffnung 65.4 ist ein weiterer Reflektor 66.4 angebracht, der den Richtstrahl aus der Austrittsöffnung senkrecht zur Bewegungsrichtung ablenkt und flächig aufgefächert, sodass er seitlich vom Abtragorgan 3 eine Sicherheitsschranke bildet. Figur 14 zeigt eine sehr ähnliche Anordnung, die aber am Maschinengestell angeordnet ist und einen noch weiter aufgefächerten Richtstrahl erzeugt. Für beide Anordnungen gilt, was bereits für die senkrecht zur Bewegungsrichtung gebildeten Sicherheitsschranken gesagt wurde, nämlich, dass sie entsprechend der Form der Ballenlücken gesteuert werden müssen, da sie nicht zwischen Ballen und Fremdobjekt unterscheiden können.

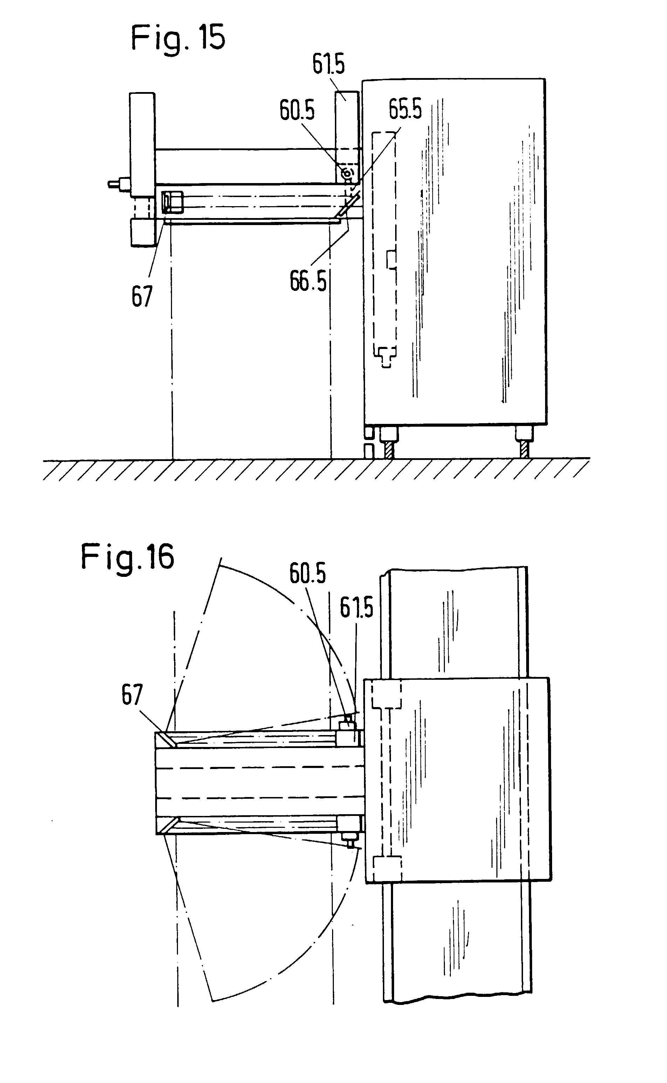

**Figuren 15 und 16** zeigen als Ansicht parallel zur Bewegungsrichtung (Figur 15) und als Draufsicht (Figur 16) eine Ausführungsform sensorischer Mittel, die über die Ballenoberfläche aufragende Fremdkörper und einen Zugriff zu den Abtragwalzen von der Seite des Abtragorganes detektieren. Auch für diese Funktion können elektroakustische Wandler und entsprechende Schachte und Reflektoren entsprechend den im Zusammenhang mit den Figuren 11 bis 14 beschriebenen Ausführungsformen zur Anwendung kommen. Die Anordnung kann beispielsweise einen Schacht 61.5 mit einem Wandler 60.5 positioniert wie in Figur 13 aufweisen. Der aus der Austrittsöffnung unten im Schacht austretende Teil des Richtstrahles wird mit einem weiteren Umlenkreflektor 66.5 oberhalb der Ballenoberfläche senkrecht zur Bewegungsrichtung umgelenkt und von einem letzten Umlenkreflektor 67 dann aufgefächert flächig über dieser Oberfläche verbreitert.

Wie bereits vorgängig erwähnt, ist die in der deutschen Offenlegungsschrift Nr. 3 932 665 A1 resp. in der europäischen Patentanmeldung mit der Veröffentlichungs-Nr. 0419 833 aufgeführte Erfindung ein integrierender Bestandteil dieser Anmeldung. Es besteht deshalb die Möglichkeit, den Überwachungssensor mit Selbstkontrolle dieser jetzigen Anmeldung auch für die Textilmaschine der vorerwähnten, bereits veröffentlichten Anmeldung zu kombinieren, indem beispielsweise anstelle der in der EP 0 419 833 A1 mit der Zahl 18 gekennzeichnete elektroakustische Wandler durch beispielsweise den elektroakustischen Wandler 60 bzw. 60′ dieser jetzigen Anmeldung ersetzt wird.

Grundsätzlich sind die elektroakustischen Wandler mit Selbstkontrolle dieser Anmeldung überall an Textilmaschinen anwendbar, welche fahrbare Elemente aufweisen, welche sich an Orten bewegen, an welchen Personen durch Kollision mit dem fahrbaren Element gefährdet sein könnten.

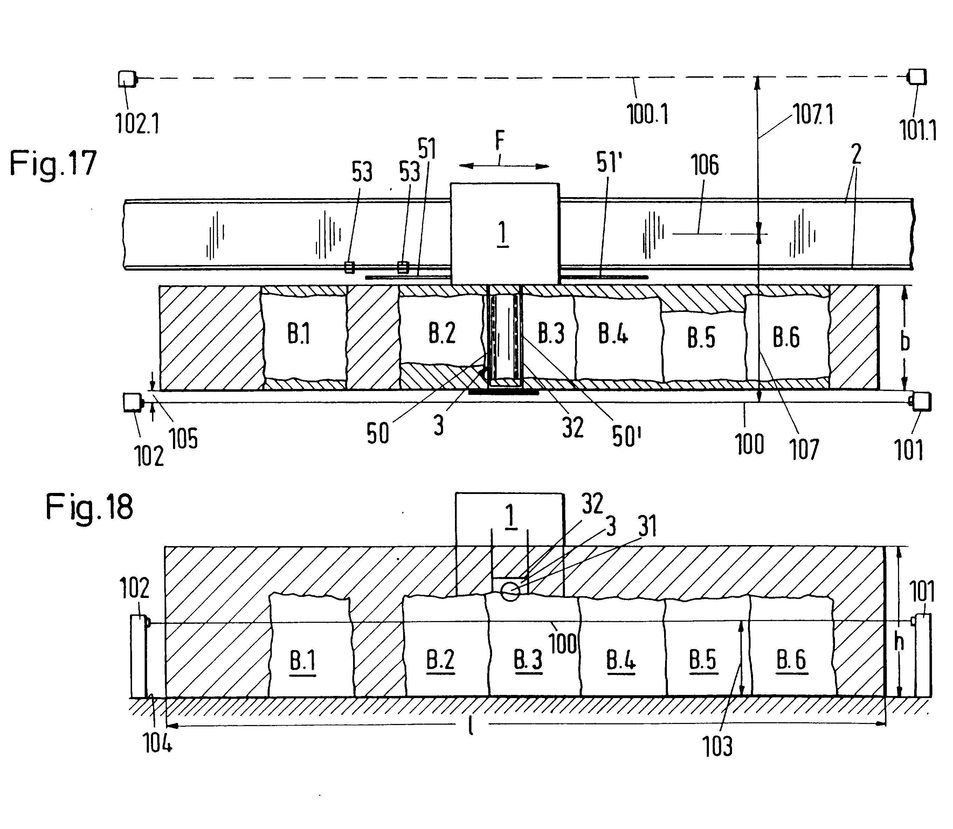

Die Figur 17 zeigt eine Lichtschranke 100 bzw. 100.1, deren Lichtstrahl vom Sender 101 bzw. 101.1 abgegeben und vom Empfänger 102 bzw. 102.1 empfangen wird.

Mit Hilfe der Lichtschranke 100 wird dargestellt, dass diese mit einem Abstand 105 von der schraffierten Gefahrenzone von der Breite b vorgesehen ist, welche bspw. zwischen 5 cm und 40 cm, vorzugsweise 10 cm beträgt.

Dieser Abstand soll gewährleisten, dass einerseits das Abtragorgan 3 nicht in den Bereich der Lichtschranke reicht und andererseits nicht so weit entfernt sein soll, dass eine Person zwischen der Lichtschranke und dem Gefahrenbereich eintreten kann.

Die Lichtschranken 100 bzw. 100.1 weisen je einen Abstand 107 bzw. 107.1 von einer Schienenmitte 106 auf, wobei der Abstand 107 dem Abstand 107.1 entspricht.

Mit dieser Massnahme besteht die Möglichkeit, auch die gegenüberliegende Seite der Abtragvorrichtung mit Ballen zu beschicken, da ohnehin das Maschinengestell 1 um 180° drehbar ist, so dass während dem Abtragen von Ballen auf der einen Seite auf der gegenüberliegenden Seite die Ballenabtragung vorbereitet werden kann.

Die Lichtschranke 100.1 wird deshalb nur dann eingeschaltet, wenn auf dieser Seite abgetragen wird, was mit der gestrichelten Darstellung dieser Lichtschranke dargestellt wird.

Das Umschalten von der einen Lichtschranke zur andern wird durch die Steuerung der Abtragvorrichtung durchgeführt.

Die Figur 18 zeigt ebenfalls mit dem schraffierten Bereich den Gefahrenbereich von der Länge 1 und der Höhe h, welcher von der Lichtschranke 100 abgeriegelt wird. Aus dieser Figur ist ebenfalls ersichtlich, dass die Lichtschranke in einer Höhe 103 vom Boden 104 vorgesehen ist, welche im Bereich zwischen 20 cm und 100 cm, vorzugsweise 40 cm, gewählt wird, und zwar ist diese Höhe im Prinzip so zu wählen, dass die Lichtschranke durch eine zu nahe an den Gefahrenbereich herantretende Person unterbrochen wird.

Es liegt durchaus im Rahmen der Erfindung, anstelle einer einzigen Lichtschranke pro Maschinenseite auch mehrere vorzusehen, oder dass anstelle eines Senders am einen Ende und eines Empfängers am andern Ende der Sender und Empfänger an der gleichen Stelle vorgesehen wird und anstelle des gezeigten Empfängers 102 bzw. 102.1 ein entsprechender Spiegel verwendet wird.

Der Lichtstrahl kann ebenfalls als ein für Personen ungefährlicher Laserstrahl sein.

## Patentansprüche

1. Ballenabtragmaschine mit einem auf Schienen (2) in entgegengesetzten Richtungen fahrbaren, den Maschinenteil bildenden Maschinengestell (1), an welchem ein auf- und abbewegbares Abtragorgan (3) vorgesehen ist, welches eine Abtragwalze (31) zum Abtragen von Faserflocken aus Faserballen aufweist und mit Überwachungsmittel (60 bis 60.5; 63 bis 63.3; 62 bis 62.3) für mindestens einen Teil einer sich um die Abtragwalze (31) befindlichen Gefahrenzone (schraffierte Fläche in Fig. 1 und 2) versehen ist, so dass ein sich in der überwachten Gefahrenzone befindlicher Gegenstand bzw. eine sich darin befindliche Person die Ballenabtragmaschine stillsetzt, wobei die Überwachungsmittel mindestens einen mit einer elektronischen Steuereinheit verbundenen elektroakustischen Wandler (60 bis 60.5) beinhalten, welcher ein Sende-Schallsignal abgibt und ein an einem im Überwachungsbereich vorhandenen Gegen-stand bzw. an einer Person (G) reflektiertes Empfangs-Schallsignal aufnimmt, dadurch gekennzeichnet, dass im weiteren Mittel (63 bis 63.3) zur Aufteilung des Sende-Schallsignales in ein in den Überwachungsbereich gerichtetes Schallmessignal und in ein Schallreferenzsignal vorgesehen sind, wobei letzteres auf einen einen vorgebbaren Abstand zum elektroakustischen Wandler aufweisenden Referenz-Reflektor (62 bis 62.3) gerichtet ist und sich der Referenz-Reflektor (62 bis 62.3) oberhalb des Wandlers (60 bis 60.5) befindet.

2. Vorrichtung nach Anspruch 1, dadurch gekennzeichnet, dass der Wandler (60, 60', 60.1, 60.2) und der Referenzreflektor (62) Teile eines Schallschachtes (61, 61.1, 61.2) sind und der Wandler am einen Ende und der Schallreflektor am gegenüberliegenden Ende des Schallschachtes angeordnet sind, während sich dazwischen ein Schallumlenkungsmittel befindet (63), welches einen Teil der Schallimpulse vom Wandler durch eine Öffnung (65) des Schachtes nach aussen bzw. von aussen nach innen zum Wandler zurücklenken.

3. Vorrichtung nach Anspruch 1, dadurch gekennzeichnet, dass der Wandler (60.3, 60.4, 60.5) und der Referenzreflektor (62.3) Teil eines Schallschachtes (61.3, 61.4, 61.5) sind und der Wandler sich zusammen mit zwei Schallumlenkungsmitteln (63.3, 63.3') zwischen den beiden Schachtenden befindet, wobei am einen Schachtende sich der Referenzreflektor und am anderen Ende eine Öffnung (65.3) befindet, durch welche ein vom einen Umlenkungsmittel (63.3') umgelenkter Teil der Schallimpulse nach aussen bzw. von aussen nach innen zum Wandler zurückgelenkt werden, während das andere Umlenkungsmittel (63.3) den Schallimpuls zum Referenzreflektor und zurück zum Wandler lenkt.

4. Vorrichtung nach Anspruch 2 oder 3, dadurch gekennzeichnet, dass ausserhalb des Schachtes ein zusätzlicher Reflektor (66, 66.4, 67) vorgesehen ist, welcher die vom Wandler gebündelt abgegebenen Schallimpulse auffächert.

5. Vorrichtung nach einem der vorangehenden Ansprüche, dadurch gekennzeichnet, dass der Wandler (60.3) an dem vom Maschinengestell abgewandten Ende (auch Stirnseite) des Abtragorgans vorgesehen ist.

6. Vorrichtung nach einem der vorangehenden Ansprüche 2 bis 5, dadurch gekennzeichnet, dass der Schacht derart vorgesehen ist, dass die den Schacht verlassenden und die in den Schacht zurückkommenden Schallimpulse im wesentlichen parallel zur Ballenreihe gerichtet sind.

7. Vorrichtung nach einem der vorangehenden Ansprüche, dadurch gekennzeichnet, dass der Schacht (61.4, 61.5) derart vorgesehen ist, dass die den Schacht verlassenden und die in den Schacht zurückkommenden Schallimpulse im wesentlichen parallel zur Rotationsachse der Abtragwalze gerichtet sind.

8. Vorrichtung nach einem der Ansprüche 2 und 7, dadurch gekennzeichnet, dass der Schacht und der zusätzliche Reflektor (66) an der Front und/oder an der Seite des Abtragorganes vorgesehen sind.

9. Vorrichtung nach einem der Ansprüche 2 und 7, dadurch gekennzeichnet, dass der Schacht und der zusätzliche Reflektor am Maschinengestell vorgesehen sind.

10. Vorrichtung nach einem der vorangehenden Ansprüche, dadurch gekennzeichnet, dass als elektroakustischer Wandler ein Ultraschallwandler vorgesehen ist.

11. Vorrichtung nach Anspruch 10, dadurch gekennzeichnet, dass der elektroakustische Wandler gleichzeitig einen Schallsender und einen Schallempfänger bildet.

12. Vorrichtung nach Anspruch 1, dadurch gekennzeichnet, dass der Abstand zwischen dem elektroakustischen Wandler und dem Referenzreflektor einstellbar und hierzu vorzugsweise der Referenzreflektor verstellbar ist.

13. Vorrichtung nach Anspruch 1, dadurch gekennzeichnet, dass der Maschinenteil in zumindest zwei verschiedenen Richtungen verfahrbar ist und für jede Richtung zumindest ein elektroakustischer Wandler vorgesehen ist und dass bei einer Bewegung des verfahrbaren Maschinenteils in einer jeweiligen Fahrrichtung jeweils nur der dieser Richtung zugeordnete elektroakustische Wandler durch die elektronische Steuereinheit ansteuerbar ist.

14. Vorrichtung nach Anspruch 1, dadurch gekennzeichnet, dass der Antrieb des bewegbaren Maschinenteils bei auftretendem Erkennungssignal durch die elektronische Steuereinheit derart ansteuerbar ist, dass zumindest zeitweise eine Unterbrechung oder Umkehr der Bewegung des bewegbaren Maschinengestells erfolgt.

15. Vorrichtung nach einem der vorangehenden Ansprüche, dadurch gekennzeichnet, dass die Überwachungsmittel zusätzlich eine Lichtschranke (100;100.1) aufweisen, welche sich parallel zur Fahrtrichtung (F) des fahrbaren Maschinenteiles (1;3) und mindestens über den ganzen Fahrweg, welcher sich über die maximale Anzahl abzutragender Ballen erstreckt, des fahrbaren Maschinenteiles (1;3) und angrenzend an die Gefahrenzone (schraffierte Flächen) erstreckt.

16. Vorrichtung nach Anspruch 15, dadurch gekennzeichnet, dass die Lichtschranken (100;100.1) einen Abstand (103) vom Boden (104) aufweisen, welcher im Bereich zwischen 20 cm und 100 cm liegt.

## Claims

1. A bale take-off machine with a machine frame (1) which is movable in opposite directions on rails (2), forms the machine part and on which an upwardly and downwardly movable take-off member (3) is provided which comprises a take-off roller (31) for taking off fibre flocks from a fibre bale and is provided with monitoring means (60 to 60.5; 63 to 63.3; 62 to 62.3) for at least a part of a danger zone (hatched area in Figs. 1 and 2) situated around the take-off roller (31), so that an object situated in the monitored danger zone or a person disposed therein will stop the bale take-off machine, with the monitoring means comprising at least one electroacoustic converter (60 to 60.5) connected with an electronic control unit, which converter emits a send sound signal and receives a received sound signal reflected by an object situated in the monitored zone or by a person (G), characterized in that furthermore means (63 to 63.3) are provided for dividing the send sound signal into a sound measuring signal aimed at the monitored zone and into a sound reference signal, with the latter being aimed at a reference reflector (62 to 62.3) disposed a predeterminable distance to the electroacoustic converter and the reference reflector (62 to 62.3) being situated above the converter (60 to 60.5).

2. An apparatus as claimed in claim 1, characterized in that the converter (60, 60', 60.1, 60.2) and the reference reflector (62) are parts of an acoustic duct (61, 61.1, 61.2) and the converter is arranged at the one end and the sound reflector at the opposite end of the acoustic duct, with a sound deflection means (63) being situated in between which guides back a part of the sound pulses from the converter through an opening (65) of the duct to the outside or from the outside to the inside towards the converter.

3. An apparatus as claimed in claim 1, characterized in that the converter (60.3, 60.4, 60.5) and the reference reflector (62.3) are part of an acoustic duct (61.3, 61.4, 61.5) and the converter is situated in combination with two sound deflection means (63.3, 63.3') between the two duct ends, with the reference reflector being situated at the one duct end and an opening (65.3) at the other end, by means of which a part of the sound pulses which are deflected by a deflection means (63.3') is deflected outwardly or from the outside inwardly to the converter while the other deflection means (63) guides the sound pulse towards the reference reflector and back to the converter.

4. An apparatus as claimed in claim 2 or 3, characterized in that an additional reflector (66, 66.4, 67) is provided outside of the chute which fans out the sound pulses which are issued by the converter in a directional manner.

5. An apparatus as claimed in one of the preceding claims, characterized in that the converter (60.3) is provided at the end (also the face side) of the take-off member which is averted from the machine frame.

6. An apparatus as claimed in one of the preceding claims 2 to 5, characterized in that the duct is provided in such a way that the sound pulses leaving the duct and the sound pulses returning back to the duct are aligned substantially parallel to the bale row.

7. An apparatus as claimed in one of the preceding claims, characterized in that the chute (61.4, 61.5) is provided in such a way that the sound pulses leaving the duct and those returning to the duct are aligned substantially parallel to the rotational axis of the take-off roller.

8. An apparatus as claimed in one of the claims 2 and 7, characterized in that the duct and the additional reflector (66) are provided at the front and/or at the side of the take-off member.

9. An apparatus as claimed in one of the claims 2 and 7, characterized in that the duct and the additional reflector are provided on the machine frame.

10. An apparatus as claimed in one of the preceding claims, characterized in that an ultrasonic converter is provided as an electroacoustic converter.

11. An apparatus as claimed in claim 10, characterized in that the electroacoustic converter simultaneously forms a sound transmitter and a sound receiver.

12. An apparatus as claimed in claim 1, characterized in that the distance between the electroacoustic converter and the reference reflector can be adjusted and that for this purpose the reference reflector is preferably adjustable.

13. An apparatus as claimed in claim 1, characterized in that the machine part is movable in at least two different directions and at least one electroacoustic converter is provided for each direction and that during a movement of the movable machine part in one driving direction only the electroacoustic converter which is allocated to this direction is controllable by the electronic control unit.

14. An apparatus as claimed in claim 1, characterized in that when the recognition signal occurs the drive of the movable machine part is controllable by the electronic control unit in such a way that at least temporarily there occurs an interruption or a reversal of the movement of the movable machine frame.

15. An apparatus as claimed in one of the preceding claims, characterized in that the monitoring means are additionally provided with a light barrier (100; 100.1) which extends parallel to the driving direction (F) of the movable machine part (1; 3) and at least over the entire path of movement, which extends over the maximum number of bales to be taken off, of the movable machine part (1; 3) and adjacent to the danger zone (hatched areas).

16. An apparatus as claimed in claim 15, characterized in that the light barriers (100; 100.1) are provided with a distance (103) from the floor (104) which is in the range between 20 cm and 100 cm.

## Revendications

1. Machine de prélèvement sur balles avec un bâti de machine (1) formant la partie de machine, déplaçable sur des rails (2) dans des directions opposées, bâti de machine sur lequel est prévu un organe de prélèvement (3) mobile en monte et baisse, qui possède un rouleau de prélèvement (31) servant à décortiquer des flocons de fibres à partir de balles de fibres, et qui est pourvu de moyens de surveillance (60 à 60.5; 63 à 63.3; 62 à 62.3) pour au moins une partie d'une zone de danger située autour du rouleau de prélèvement (31) (surfaces hachurées dans les figures 1 et 2), de sorte qu'un objet se trouvant dans la zone de danger surveillée, respectivement une personne se trouvant dans cette zone, met à l'arrêt la machine de prélèvement sur balles, et où les moyens de surveillance comprennent au moins un convertisseur électroacoustique (60 à 60.5), relié avec une unité d'asservissement électronique, lequel émet un signal acoustique d'émission et reçoit un signal acoustique de réception réfléchi par un objet respectivement par une personne (G) se trouvant dans la zone de surveillance,
caractérisée par le fait que,
en outre, des moyens (63 à 63.3) sont prévus pour réaliser le partage du signal acoustique d'émission en un signal de mesure acoustique dirigé dans la zone de surveillance et en un signal de référence acoustique, et où le dernier est dirigé vers un réflecteur de référence (62 à 62.3) possédant une distance pouvant être prédéterminée par rapport au convertisseur électroacoustique, et le réflecteur de référence (62 à 62.3) se trouve au-dessus du convertisseur (60 à 60.5).

2. Dispositif selon revendication 1,
caractérisé par le fait que
le convertisseur (60, 60', 60.1, 60.2) et le réflecteur de référence (62) sont des parties d'une boîte acoustique (61, 61.1, 61.2), et le convertisseur est disposé à une extrémité de la boîte acoustique et le réflecteur acoustique est disposé à l'extrémité opposée de la boîte acoustique, alors qu'un moyen de déviation acoustique (63) se trouve entre les deux, lequel dévie en arrière vers l'extérieur, une partie des impulsions acoustiques du convertisseur, à travers une ouverture (65) de la boîte, respectivement depuis l'extérieur vers l'intérieur, en direction du convertisseur.

3. Dispositif selon revendication 1,
caractérisé par le fait que
le convertisseur (60.3, 60.4, 60.5) et le réflecteur de référence (62.3) sont des parties d'une boîte acoustique (61.3, 61.4, 61.5), et le convertisseur se trouve, conjointement avec deux moyens de déviation acoustiques (63.3, 63.3'), entre les deux extrémités de la boîte, et où le réflecteur de référence se trouve à une extrémité de la boîte et une ouverture (65.3) se trouve à l'autre extrémité, ouverture au travers de laquelle une partie des impulsions acoustiques, déviée par un moyen de déviation (63.3'), est déviée en arrière vers l'extérieur, respectivement depuis l'extérieur vers l'intérieur, en direction du convertisseur, tandis que l'autre moyen de déviation (63.3) dirige l'impulsion acoustique vers le réflecteur de référence et en arrière, en direction du convertisseur.

4. Dispositif selon revendication 2 ou 3,
caractérisé par le fait
qu'un réflecteur supplémentaire (66, 66.4, 67) est prévu en dehors de la boîte, lequel disperse en éventail les impulsions acoustiques émises en faisceaux par le convertisseur.

5. Dispositif selon l'une des revendications précédentes,
caractérisé par le fait que,
par rapport au bâti de machine, le convertisseur (60.3) est prévu à l'extrémité opposée de l'organe de prélèvement (également face frontale).

6. Dispositif selon l'une des revendications précédentes 2 à 5,
caractérisé par le fait que
la boîte est prévue de telle manière que les impulsions acoustiques, quittant la boîte et revenant dans la boîte, sont dirigées essentiellement d'une manière parallèle à la rangée de balles.

7. Dispositif selon l'une des revendications précédentes,
caractérisé par le fait que
la boîte (61.4, 61.5) est prévue de telle manière que les impulsions acoustiques, quittant la boîte et revenant dans la boîte, sont dirigées essentiellement d'une manière parallèle à l'axe de rotation du rouleau de prélèvement.

8. Dispositif selon une des revendications 2 et 7,
caractérisé par le fait que
la boîte et le réflecteur supplémentaire (66) sont prévus sur la face frontale et/ou sur le côté de l'organe de prélèvement.

9. Dispositif selon une des revendications 2 et 7,
caractérisé par le fait que
la boîte et le réflecteur supplémentaire sont prévus sur le bâti de machine.

10. Dispositif selon l'une des revendications précédentes,
caractérisé par le fait
qu'un convertisseur à ultrason est prévu comme convertisseur électroacoustique.

11. Dispositif selon revendication 10,
caractérisé par le fait que
le convertisseur électroacoustique forme simultanément un émetteur acoustique et un récepteur acoustique.

12. Dispositif selon revendication 1,
caractérisé par le fait que
la distance comprise entre le convertisseur électroacoustique et le réflecteur de référence est réglable et, dans ce but, le réflecteur de référence est de préférence ajustable.

13. Dispositif selon revendication 1,
caractérisé par le fait que
la partie de machine est déplaçable au moins dans deux directions différentes, et au moins un convertisseur électroacoustique est prévu pour chaque direction, et que, pour un mouvement de la partie de machine déplaçable dans une direction quelconque de déplacement, seul le convertisseur électroacoustique attribué à cette direction peut être commandé par l'unité d'asservissement électronique.

14. Dispositif selon revendication 1,
caractérisé par le fait que,
lors de l'apparition d'un signal d'identification, l'entraînement de la partie de machine déplaçable peut être commandé par l'unité d'asservissement électronique, de telle manière qu'il se produit, au moins temporairement, une interruption ou une inversion du mouvement du bâti de machine déplaçable.

15. Dispositif selon l'une des revendications précédentes,
caractérisé par le fait que
les moyens de surveillance possèdent en plus une cellule photoélectrique (100; 100.1) qui s'étend d'une manière parallèle à la direction de déplacement (F) de la partie de machine déplaçable (1; 3) et au moins plus loin que le trajet de déplacement complet de la partie de machine déplaçable (1; 3), qui s'étend au-dessus du nombre maximum de balles devant être décortiquées, et limitrophe à la zone de danger (surfaces hachurées).

16. Dispositif selon revendication 15,
caractérisé par le fait que
les cellules photoélectriques (100; 100.1) possèdent une distance (103) à partir du plancher (104), laquelle se situe dans la zone comprise entre 20 cm et 100 cm.
